# EUROPÄISCHE PATENTSCHRIFT

(11) **EP 2 705 410 B1**
(45) Veröffentlichungstag und Bekanntmachung des Hinweises auf die Patenterteilung: **08.01.2020**
(21) Anmeldenummer: 12753428.7
(22) Anmeldetag: 08.08.2012
(51) Int. Cl.: G05B 19/042, H04L 9/32

(54) **VERFAHREN UND SYSTEM ZUM BEREITSTELLEN VON GERÄTESPEZIFISCHEN BETREIBERDATEN FÜR EIN AUTOMATISIERUNGSGERÄT EINER AUTOMATISIERUNGSANLAGE**
METHOD AND SYSTEM FOR PROVIDING DEVICE-SPECIFIC OPERATOR DATA FOR AN AUTOMATION DEVICE IN AN AUTOMATION INSTALLATION
PROCÉDÉ ET SYSTÈME POUR FOURNIR DES DONNÉES D'EXPLOITANT, SPÉCIFIQUES D'UN APPAREIL, POUR UN APPAREIL D'AUTOMATISATION D'UNE INSTALLATION D'AUTOMATISATION

(30) Priorität: 30.08.2011 DE 102011081804
(43) Veröffentlichungstag der Anmeldung: 12.03.2014
(73) Patentinhaber: Siemens Aktiengesellschaft, 80333 München (DE)
(72) Erfinder: FISCHER, Kai, 85598 Baldham (DE); FRIES, Steffen, 85598 Baldham (DE); GESSNER, Jürgen, 85661 Forstinning (DE); HOUYOU, Amine, Mohamed, 81543 München (DE); HUTH, Hans-Peter, 80638 München (DE); SCHATTLEITNER, Angela, 83104 Tuntenhausen (DE)
(86) Internationale Anmeldenummer: PCT/EP2012/065489
(87) Internationale Veröffentlichungsnummer: WO 2013/029940

(56) Entgegenhaltungen:
- EP-A1- 2 333 624
- WO-A1-01/46765

## Beschreibung

Die Erfindung betrifft ein Verfahren und ein System zum Bereitstellen von gerätespezifischen Betreiberdaten für ein Automatisierungsgerät einer Automatisierungsanlage, insbesondere ein Verfahren und ein System zum Bereitstellen von gerätespezifischen Betreiberdaten für ein Automatisierungssteuergerät, insbesondere ein SPS-Steuergerät oder ein Feldgerät, das an einen Feldbus angeschlossen ist.

Automatisierungsgeräte müssen konfiguriert werden, bevor sie im Zusammenspiel mit anderen Automatisierungsgeräten in einer Automatisierungsanlage genutzt werden können. In herkömmlichen Automatisierungsanlagen bzw. Automatisierungssystemen wird daher eine Parametrisierung der Automatisierungsgeräte vor ihrem eigentlichen Einsatz durchgeführt. Diese Parametrisierung kann allgemeine Konfigurationsdaten enthalten, beispielsweise eine IP-Adresse oder auch einsatzspezifische Konfigurationsdaten, beispielsweise Schaltzeiten des Automatisierungsgerätes. Weiterhin ist es möglich, im Betrieb eine Rekonfiguration der Automatisierungsgeräte durchzuführen. Da Sicherheit gegenüber Manipulationen mehr und mehr zum integralen Bestandteil derartiger Automatisierungsgeräte wird, werden zunehmend Automatisierungsgeräte mit Sicherheitsmerkmalen bzw. Authentisierungs-Credentials ausgeliefert. Bei herkömmlichen Automatisierungsanlagen werden gerätespezifische Betreiberdaten eines Anlagenbetreibers der Automatisierungsanlage den Automatisierungsgeräten ungeschützt bereitgestellt, so dass für Dritte eine Manipulation dieser Daten möglich ist, sofern sie Zugang zu der Automatisierungsanlage erlangen.

Die EP 2333 624 A1 zeigt ein Verfahren, bei welchem einem Automatisierungsgerät Konfigurationsdaten zugewiesen werden, nachdem dieses authentisiert wurde.

Es ist daher eine Aufgabe der vorliegenden Erfindung, ein Verfahren und ein System zum sicheren Bereitstellen von gerätespezifischen Betreiberdaten für ein Automatisierungsgerät einer Automatisierungsanlage zu schaffen, bei denen Dritte keine Möglichkeit zur Manipulation von gerätespezifischen Betreiberdaten des Anlagenbetreibers der Automatisierungsanlage haben, selbst wenn sie Zugang zu der Automatisierungsanlage erlangen.

Diese Aufgabe wird erfindungsgemäß durch ein Verfahren mit den im Patentanspruch 1 angegebenen Merkmalen gelöst.

Bei einer möglichen Ausführungsform des erfindungsgemäßen Verfahrens wird das Authentisierungs-Credential durch ein Geräte-Zertifikat des Automatisierungsgerätes gebildet.

Bei einer möglichen Ausführungsform des erfindungsgemäßen Verfahrens weisen die aktuellen gerätespezifischen Betreiberdaten für das Automatisierungsgerät Konfigurationsdaten zur Konfigurationen des Automatisierungsgerätes auf.

Bei einer weiteren möglichen Ausführungsform des erfindungsgemäßen Verfahrens weisen die aktuellen gerätespezifischen Betreiberdaten für das Automatisierungsgerät Firmwaredaten für das Automatisierungsgerät auf.

Bei einer weiteren möglichen Ausführungsform des erfindungsgemäßen Verfahrens weisen die aktuellen gerätespezifischen Betreiberdaten für das Automatisierungsgerät Parameterdaten von Geräten auf, die durch das Automatisierungsgerät gesteuert werden.

Bei einer weiteren möglichen Ausführungsform des erfindungsgemäßen Verfahrens werden die aktuellen gerätespezifischen Betreiberdaten in ein Attributzertifikat für das Geräte-Zertifikat des Automatisierungsgerätes eingeschrieben, um die aktuellen gerätespezifischen Betreiberdaten an das Gerätezertifikat des Automatisierungsgerätes zu binden.

Bei einer weiteren möglichen Ausführungsform des erfindungsgemäßen Verfahrens wird eine Adresse zur Adressierung der aktuellen gerätespezifischen Betreiberdaten in das Gerätezertifikat des Automatisierungsgerätes eingeschrieben, um die aktuellen gerätespezifischen Betreiberdaten an das Gerätezertifikat des Automatisierungsgerätes zu binden.
Bei einer weiteren möglichen Ausführungsform des erfindungsgemäßen Verfahrens wird die Adresse zur Adressierung der aktuellen gerätespezifischen Betreiberdaten anhand einer gerätespezifischen Seriennummer, die in dem Gerätezertifikat des Automatisierungsgerätes enthalten ist, ermittelt.

Bei einer weiteren möglichen Ausführungsform des erfindungsgemäßen Verfahrens werden die aktuellen gerätespezifischen Betreiberdaten als kodierte Attributdaten in das Gerätezertifikat des Automatisierungsgerätes eingeschrieben, um die aktuellen gerätespezifischen Betreiberdaten an das Gerätezertifikat des Automatisierungsgerätes zu binden.

Bei einer weiteren möglichen Ausführungsform des erfindungsgemäßen Verfahrens fragt das Automatisierungsgerät in regelmäßigen Zeitabständen oder bei Auftreten eines Ereignisses an, ob aktuelle gerätespezifische Betreiberdaten des Anlagenbetreibers für das Automatisierungsgerät vorhanden sind.

Bei einer weiteren möglichen Ausführungsform des erfindungsgemäßen Verfahrens bindet der Policy Enforcement Server die aktuellen gerätespezifischen Betreiberdaten an das Authentisierungs-Credential, nachdem der Authentisierungsserver dem Policy Enforcement Server die erfolgreiche Authentisierung des Automatisierungsgerätes gegenüber dem Authentisierungsservers gemeldet hat.

Bei einer weiteren möglichen Ausführungsform des erfindungsgemäßen Verfahrens werden die aktuellen gerätespezifischen Betreiberdaten digital signiert.

Bei einer weiteren möglichen Ausführungsform des erfindungsgemäßen Verfahrens weist das mindestens eine Authentisierungs-Credential ein Gerätezertifikat und/oder einen kryptographischen Schlüssel und/oder ein kryptographisches Schlüsselpaar auf.

Die Erfindung schafft ferner ein System zum Bereitstellen von gerätespezifischen Betreiberdaten für ein Automatisierungsgerät einer Automatisierungsanlage mit den in Patentanspruch 14 angegebenen Merkmalen.

Die Erfindung schafft demnach ein System zum Bereitstellen von gerätespezifischen Betreiberdaten für ein Automatisierungsgerät einer Automatisierungsanlage, welches sich mittels mindestens eines Authentisierungs-Credentials gegenüber einem Authentisierungsserver der Automatisierungsanlage authentisiert,
wobei bei Vorhandensein aktueller gerätespezifischer Betreiberdaten des Anlagenbetreibers der Automatisierungsanlage für das Automatisierungsgerät diese aktuellen gerätespezifischen Betreiberdaten an das Authentisierungs-Credential des Automatisierungsgerätes durch einen Policy Enforcement Server der Automatisierungsanlage gebunden werden.

Bei einer möglichen Ausführungsform des erfindungsgemäßen Systems erhält der Policy Enforcement Server die aktuellen gerätespezifischen Betreiberdaten von einem Konfigurationsserver und bindet diese an das Authentisierungs-Credential des Automatisierungsgerätes, sobald dem Policy Enforcement Server die erfolgreiche Authentisierung des Automatisierungsgerätes gegenüber dem Authentisierungsserver der Automatisierungsanlage gemeldet wird.

Bei einer möglichen Ausführungsform des erfindungsgemäßen Systems weist das Automatisierungsgerät ein Automatisierungssteuergerät, ein SPS-Steuergerät oder ein Feldgerät auf.

Im Weiteren werden mögliche Ausführungsformen des erfindungsgemäßen Verfahrens und des erfindungsgemäßen Systems zum Bereitstellen von gerätespezifischen Betreiberdaten für ein Automatisierungsgerät einer Automatisierungsanlage unter Bezugnahme auf die beigefügten Figuren detailliert beschrieben.

Es zeigen:
- Fig. 1: ein Blockschaubild zur Verdeutlichung eines möglichen Ausführungsbeispiels eines Systems zum Bereitstellen von gerätespezifischen Betreiberdaten für ein Automatisierungsgerät einer Automatisierungsanlage gemäß der Erfindung;
- Fig. 2: ein Beispiel für ein bei dem erfindungsgemäßen Verfahren und dem erfindungsgemäßen System in einem Ausführungsbeispiel verwendeten Zertifikates;
- Fig. 3: ein weiteres Beispiel für ein bei dem erfindungsgemäßen Verfahren und dem erfindungsgemäßen System verwendbaren Zertifikates.

Im Weiteren wird das erfindungsgemäße System und das erfindungsgemäße Verfahren zum Bereitstellen von gerätespezifischen Betreiberdaten für ein Automatisierungsgerät einer Automatisierungsanlage anhand eines Ausführungsbeispiels beschrieben.

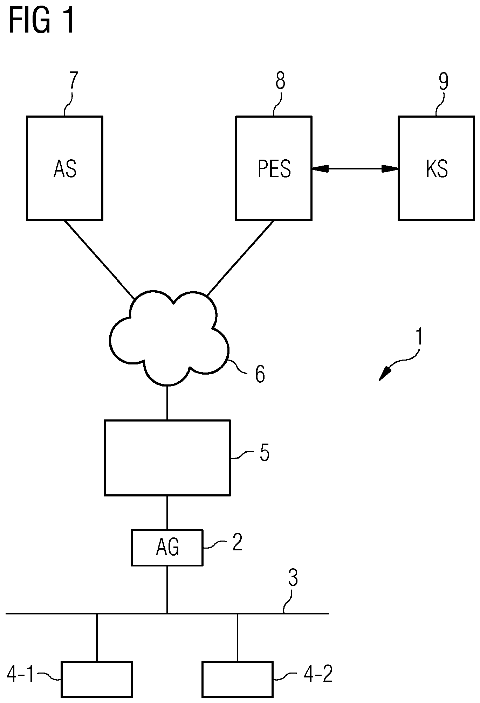

Wie man aus Fig. 1 erkennen kann, weist eine Automatisierungsanlage 1 in dem dargestellten Ausführungsbeispiel mindestens ein Automatisierungsgerät 2 auf, das beispielsweise über einen Feldbus 3 mit weiteren Geräten 4-1, 4-2 verbunden sein kann. Bei den weiteren Geräten 4-1, 4-2 kann es sich um Automatisierungsgeräte, insbesondere Feldgeräte, handeln. Bei dem Automatisierungsgerät 2 handelt es sich bei einer möglichen Ausführungsform um ein Automatisierungssteuergerät zur Ansteuerung weiterer Geräte 4-1, 4-2 über einen Bus, insbesondere einen Feldbus 3. Weiterhin kann es sich bei dem Automatisierungsgerät 2 um ein SPS-Steuergerät oder um ein Feldgerät handeln. Bei dem in Fig. 1 dargestellten Ausführungsbeispiel ist das Automatisierungsgerät 2 über ein Network Access Switch bzw. Netzzugangsswitch 5 mit einem Datennetzwerk 6 verbunden. An diesem Datennetzwerk 6 ist ein Authentisierungsserver 7 und ein Policy Enforcement Server 8 angeschlossen. Außerdem kann der Policy Enforcement Server 8 über das Netzwerk 6 oder direkt mit einem Konfigurationsserver 9 in Verbindung stehen. Das Automatisierungsgerät 2 verfügt über mindestens ein Authentisierungs-Credential, mit dessen Hilfe sich das Automatisierungsgerät gegenüber dem Authentisierungsserver 7 der Automatisierungsanlage 1 authentisieren kann. Bei diesem Authentisierungs-Credential kann es sich beispielsweise um ein Gerätezertifikat Z des Automatisierungsgerätes 2 handeln. Bei Vorhandensein aktueller gerätespezifischer Betreiberdaten des Anlagenbetreibers der Automatisierungsanlage 1 für ein Automatisierungsgerät 2 werden diese aktuellen gerätespezifischen Betreiberdaten an das Authentisierungs-Credential des Automatisierungsgerätes 2 gebunden. Dieses Binden der aktuellen gerätespezifischen Betreiberdaten an das Authentisierungs-Credential kann bei einer möglichen Ausführungsform durch den in Fig. 1 dargestellten Policy Enforcement Server 8 der Automatisierungsanlage 1 erfolgen. Der Policy Enforcement Server 8 bindet die aktuellen gerätespezifischen Betreiberdaten, sobald dem Policy Enforcement Server 8 eine erfolgreiche Authentisierung des Automatisierungsgerätes 5 gegenüber dem Authentisierungsserver 7 der Automatisierungsanlage 1 gemeldet wird. Bei einer möglichen Ausführungsform erhält der Policy Enforcement Server 8 die aktuellen gerätespezifischen Betreiberdaten von dem Konfigurationsserver 9.

Die aktuellen gerätespezifischen Betreiberdaten für das Automatisierungsgerät 2 weisen bei einer möglichen Ausführungsform Konfigurationsdaten zur Konfiguration des Automatisierungsgerätes 2 auf. Weiterhin können die aktuellen gerätespezifischen Betreiberdaten für das Automatisierungsgerät 2 auch Firmwaredaten für das Automatisierungsgerät 2 umfassen. Weiterhin ist es möglich, dass die aktuellen gerätespezifischen Betreiberdaten für das Automatisierungsgerät 2 Parameterdaten von Geräten aufweisen, die durch das Automatisierungsgerät 2 gesteuert werden. Beispielsweise umfassen diese Parameterdaten Daten der in Fig. 1 dargestellten Geräte 4-1, 4-2, die über den Feldbus 3 mit dem Automatisierungsgerät 2 verbunden sind und gegebenenfalls durch das Automatisierungsgerät 2 gesteuert werden. Diese aktuellen gerätespezifischen Betreiberdaten können beispielsweise durch den in Fig. 1 dargestellten Konfigurationsserver 9 bereitgestellt werden. Das Binden der aktuellen gerätespezifischen Betreiberdaten an das Authentisierungs-Credential des Automatisierungsgerätes 2 erfolgt bei einer möglichen Ausführungsform durch den in Fig. 1 dargestellten Policy Enforcement Server 8 der Automatisierungsanlage 1. In einer alternativen Ausführungsform kann das Binden der gerätespezifischen Betreiberdaten des Anlagenbetreibers an das Authentisierungs-Credential auch direkt durch den Authentisierungsserver 7 erfolgen. Bei dem Authentisierungsserver 7 kann es sich beispielsweise um einen AAA-Server handeln. Bei einer möglichen Ausführungsform ist der Authentisierungsserver 7 ein Radiusserver zur Durchführung der Authentisierung des Automatisierungsgerätes 2. Bei einer Ausführungsform erhält der Authentisierungsserver 7 die gerätespezifischen Betreiberdaten beispielsweise direkt von einem Konfigurationsserver 9. Bei einer möglichen Ausführungsform werden die aktuellen gerätespezifischen Betreiberdaten digital signiert.

In einer möglichen Ausführungsform wird das verwendete Authentisierungs-Credential durch ein Gerätezertifikat Z des Automatisierungsgerätes 2 gebildet. Um die aktuellen gerätespezifischen Betreiberdaten an das Gerätezertifikat Z des Automatisierungsgerätes 2 zu binden, werden bei einer möglichen Ausführungsform die aktuellen gerätespezifischen Betreiberdaten in ein Attributzertifikat für das Gerätezertifikat Z des Automatisierungsgerätes 2 eingeschrieben. Bei einer weiteren alternativen Ausführungsform wird zum Binden der gerätespezifischen Betreiberdaten an das Gerätezertifikat Z des Automatisierungsgerätes 2 eine Adresse zur Adressierung der aktuellen gerätespezifischen Betreiberdaten in das Gerätezertifikat Z des Automatisierungsgerätes 2 eingeschrieben. Bei einer möglichen Variante wird dabei die Adresse zur Adressierung der aktuellen gerätespezifischen Betreiberdaten anhand einer gerätespezifischen Seriennummer ermittelt, die in dem Gerätezertifikat Z des Automatisierungsgerätes 2 enthalten ist.

Bei einer möglichen Ausführungsform werden die aktuellen gerätespezifischen Betreiberdaten als kodierte Attributdaten in das Gerätezertifikat Z des Automatisierungsgerätes 2 eingeschrieben, um die aktuellen gerätespezifischen Betreiberdaten an das Gerätezertifikat Z des Automatisierungsgerätes 2 zu binden.

Bei einer möglichen Ausführungsform fragt das Automatisierungsgerät 2 in regelmäßigen Zeitabständen an, ob aktuelle gerätespezifische Betreiberdaten des Anlagenbetreibers für das Automatisierungsgerät 2 vorhanden sind, welche beispielsweise von dem Konfigurationsserver 9 zur Verfügung gestellt werden. Bei einer weiteren möglichen Ausführungsform fragt das Automatisierungsgerät 2 bei Auftreten eines bestimmten Ereignisses an, ob aktuelle gerätespezifische Betreiberdaten des Anlagenbetreibers für das Automatisierungsgerät 2 vorhanden sind. Bei einer weiteren möglichen Ausführungsform wird das Authentisierungs-Credential durch einen kryptographischen Schlüssel oder ein kryptographisches Schlüsselpaar gebildet.

Bei dem erfindungsgemäßen System wird bei einer möglichen Ausführungsform ein Zertifikat Z, insbesondere ein Gerätezertifikat des Automatisierungsgerätes 2, zum Transport von gerätespezifischen Betreiberdaten des Betreibers der Automatisierungsanlage 1, insbesondere zum Transport von Konfigurationsdaten, benutzt. Weiterhin können die Betreiberdaten bei einer möglichen Ausführungsform ein gesamtes Geräteimage bzw. eine Firmware für eingebettete Geräte bzw. Teile des Betriebssystems, insbesondere Bibliotheken oder Applikationen bzw. Teile davon, enthalten. Diese Daten können beispielsweise auf die generellen Fähigkeiten der Gerätekasse oder auch des spezifischen Gerätestyps des Automatisierungsgerätes 2 abgestimmt sein, wobei sie bei einer möglichen Ausführungsform einen speziellen Softwareversionsstand des bestimmten Gerätestyps des Automatisierungsgerätes 2 berücksichtigen können. Auf diese Weise kann auch das Nachladen von Sicherheitspatches unterstützt werden, wenn Sicherheitslücken in einer speziellen Systemsoftwareversion behoben werden sollen. Die Dauer der Betreiberdaten bzw. Konfigurationsdaten kann von der Gültigkeitsdauer bzw. Lebenszeit des Zertifikates Z abweichen. Diese Tatsache kann bei der Neuerstellung des Zertifikates berücksichtigt werden, insbesondere, wenn die Betreiberdaten bzw. Konfigurationsdaten direkt in das Zertifikat kodiert werden. Weiterhin ist es möglich, dass eine Selektion der Betreiberdaten bzw. Konfigurationsdaten speziell auf einen bestimmten physikalischen Standort des Automatisierungsgerätes 2 oder seinen logischen Standort innerhalb der Automatisierungsanlage 1 abgestimmt erfolgt. Dies kann bei einer möglichen Ausführungsform durch eine Verbindung des Authentisierungsservers 7 mit einem Konfigurationsserver 9 erreicht werden, der auch standortabhängige Planungsdaten enthalten kann.

Bei einer möglichen Ausführungsform werden die Betreiberdaten direkt in ein Zertifikat Z, insbesondere ein Gerätezertifikat, einkodiert. Dabei kann die Größe des Zertifikates anwachsen, so dass der notwendige Speicher hierfür zur Verfügung stehen muss. Bei einer weiteren möglichen Ausführungsvariante weist das Zertifikat Z eine gerätespezifische oder serienspezifische Seriennummer auf, die zusammen mit dem Aussteller und der Seriennummer des Zertifikates Z ausreichend Informationen bietet, so dass ein Server die möglichen Betreiberdaten bzw. Konfigurationsdaten vom Betreiber der Automatisierungsanlage 1 abfragen kann. Bei einer weiteren Ausführungsform enthält das Zertifikat Z einen Link auf eine Webseite des Anlagenbetreibers in der mögliche gerätespezifische Betreiberdaten bzw. Konfigurationsdaten in Form einer Device Configuration Database abgelegt sein können. Bei einer weiteren Ausführungsform sind die von dem Betreiber zur Verfügung gestellten Betreiberdaten digital signiert, um die Integrität dieser Daten zu sichern, so dass sie für eine Automatisierung in der Planung von Anlagen nutzbar sind. Bei einer möglichen Ausführungsvariante werden die gerätespezifischen Betreiberdaten in ein Attributzertifikat für ein Gerätezertifikat des Automatisierungsgerätes 2 eingeschrieben. Bei einer Ausführungsvariante kann man die Logotype Extension nutzen, um Geräte oder serienspezifische Informationen als 1D- oder 2D-Barcode zu kodieren. Bei Verwendung eines Attributzertifikats muss im Falle einer Änderung nur das Attributzertifikat erneuert werden, wobei dies zu einer vereinfachten Handhabung führt, da hierbei keine geheimen kryptographischen Schlüssel übertragen werden müssen. Die Abfrage der Betreiberdaten aus einer Konfigurationsdatenband des Konfigurationsservers 9 erfolgt bei einer möglichen Ausführungsvariante online.

Bei einer möglichen Ausführungsvariante sind Betreiberdaten, beispielsweise Konfigurationsdaten, direkt in einem Zertifikat Z kodiert.

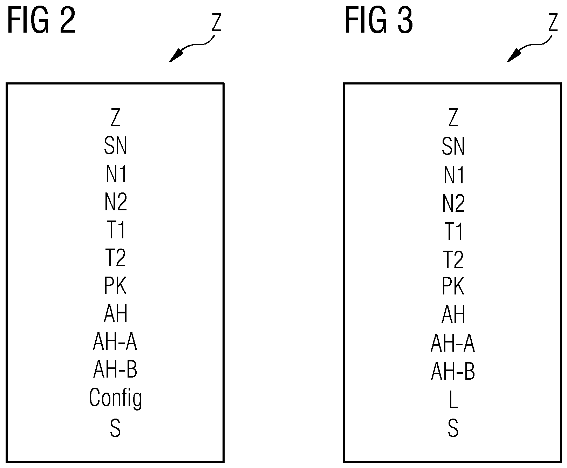

Fig. 2 zeigt ein Beispiel für ein Zertifikat Z, bei dem Konfigurationsdaten als Attribut direkt in einem Gerätezertifikat Z eines Automatisierungsgerätes 2 kodiert sind. Spezifische Konfigurationsdaten Config werden hierbei als weitere Informationen in ein Gerätezertifikat Z des Herstellers eingefügt. Die Konfigurationsinformationen können beispielsweise Adressinformationen umfassen, sowie gerätespezifische Einstellungen, beispielsweise eine time-out-Zeit, für den Abbruch einer Verbindung für ein Kommunikationsmodul oder eine vorgegebene Drehzahl für einen durch das Automatisierungsgerät 2 angesteuerten Motor. Das Zertifikat Z weist z.B. als Zertifikat-ID eine Seriennummer SN auf. Ferner enthält das Zertifikat Z den Namen N₁ desjenigen, für den es ausgestellt ist und den Namen N₂ des Ausstellers auf. Ferner gibt das Zertifikat Z eine Zeitangabe ab, ab wann es gültig ist und eine Zeitangabe T₂, bis wann es gültig ist. Darüber hinaus weist das Zertifikat Z einen öffentlichen Schlüssel Pk sowie Attribute Att, beispielsweise Attribute Att-A, Att-B auf. Das Zertifikat Z ist bei einer möglichen Ausführungsform mit einer Signatur S signiert. Bei dem in Fig. 2 dargestellten Zertifikat Z kann es sich beispielsweise um ein erweitertes X.509-Zertifikat handeln. Bei Verwendung eines Zertifikates Z, wie es in Fig. 2 dargestellt ist, erfolgt das Verfahren zum Bereitstellen von gerätespezifischen Betreiberdaten für ein Automatisierungsgerät 2 einer Automatisierungsanlage 1, wie sie beispielsweise in Fig. 1 dargestellt ist, bei einer Ausführungsvariante wie folgt.

Zunächst authentisiert sich das Automatisierungsgerät 2 an dem Automatisierungsserver 7, um Zugang zu dem Netzwerk 6 zu erhalten. Bei dem Authentisierungsserver 7 kann es sich beispielsweise um einen Radiusserver handeln. Zur Authentisierung wird das betreiberspezifische Authentisierungs-Credential des Automatisierungsgerätes 2 verwendet, das dem Authentisierungsserver bekannt ist. Handelt sich bei dem Authentisierungs-Credential um ein Zertifikat, können bei einer möglichen Ausführungsvariante zertifikatsbasierte EAP-Methoden, wie beispielsweise EAP-TLS, verwendet werden. Das Authentisierungs-Credential enthält Konfigurationsdaten des Automatisierungsgerätes 2 an dem spezifischen Einsatzort innerhalb der Automatisierungsanlage 1.

Nach erfolgreicher Authentisierung des Automatisierungsgerätes 2 gegenüber dem Authentisierungsserver 7 sendet der Authentisierungsserver 7 an das Network Access Switch 5 eine Mitteilung, dass es das Automatisierungsgerät 2 an das Netzwerk 6 anbinden darf. Im Nachgang kann eine Adresskonfiguration des Automatisierungsgerätes 2 erfolgen.

Der Authentisierungsserver 7 meldet nun die erfolgreiche Authentisierung des Authentisierungsgerätes 2 an den Policy Enforcement Server 8. Hierbei wird beispielsweise das Gerätezertifikat Z des Automatisierungsgerätes 2 mitgeschickt.

Auf Basis der in dem Gerätezertifikat Z enthaltenen Konfigurationsdaten, verknüpft der Policy Enforcement Server 8 den aktuellen Konfigurationsstatus des Automatisierungsgerätes 2 und fordert beim Vorliegen aktuellerer Betreiberdaten diese aktuellen gerätespezifischen Betreiberdaten von dem Konfigurationsserver 9 an.

Der Konfigurationsserver 9 erstellt einen neuen Satz von Konfigurations- bzw. Betreiberdaten entsprechend einem Einsatzplan des Automatisierungsgerätes 2 und sendet diese aktuellen gerätespezifischen Betreiberdaten an den Policy Enforcement Server 8.

Der Policy Enforcement Server 8 erstellt basierend auf dem in dem existierenden Gerätezertifikat Z enthaltenen öffentlichen Schlüssel und den aktuellen Betreiberdaten ein neues Gerätezertifikat und übermittelt dieses an den Authentisierungsserver 7. Alternativ kann hierbei auch ein komplettes kryptographisches Schlüsselpaar, welches einen öffentlichen und einen privaten kryptographischen Schlüssel enthält, generiert werden.

Der Policy Enforcement Server 8 übermittelt das aktualisierte Gerätezertifikat Z' und die darin enthaltenen Konfigurations- bzw. Betreiberdaten an das Automatisierungsgerät 2. Das Automatisierungsgerät 2 kann sich nunmehr basierend auf den aktualisierten Betreiberdaten bzw. Konfigurationsdaten rekonfigurieren und erneut an dem Netzwerk anmelden.

Bei einer weiteren möglichen Ausführungsform des erfindungsgemäßen Systems und Verfahrens wird in dem Gerätezertifikat Z ein Konfigurationslink bzw. eine Adresse zur Adressierung der aktuellen gerätespezifischen Betreiberdaten in das Gerätezertifikat des Automatisierungsgerätes 2 eingeschrieben, wie in Fig. 3 dargestellt.

Bei dieser Ausführungsvariante erfolgt ebenfalls zunächst eine Authentisierung des Automatisierungsgerätes 2 bei dem Authentisierungsserver 7, um Zugang zum Netzwerk zu erhalten. Das Authentisierungs-Credential weist ein Link zu den Betreiberdaten des Automatisierungsgerätes 2 auf. Nach erfolgreicher Authentisierung gibt der Authentisierungsserver dem Network Access Switch 5 Anweisung, dass es das Automatisierungsgerät 2 an das Netzwerk anbinden darf. Der Authentisierungsserver 7 meldet anschließend die erfolgreiche Authentisierung des Automatisierungsgerätes 2 an den Policy Enforcement Server 8. Hierbei wird das Gerätezertifikat Z des Automatisierungsgerätes 2 mit dem darin enthaltenen Link mitgeschickt. Anhand des in dem Gerätezertifikat Z enthaltenen Link auf die Betreiberdaten, überprüft der Policy Enforcement Server 8 den aktuellen Konfigurationsstatus des Automatisierungsgerätes 2 und schickt bei Bedarf eine Anforderung an den Konfigurationsserver 9, um die aktuellen Betreiberdaten zu erhalten. Der Authentisierungsserver 7 kann bei einer möglichen Ausführungsform einen neuen Satz von Betreiberdaten bzw. Konfigurationsparametern in Abhängigkeit des aktuellen Einsatzplanes des Automatisierungsgerätes 2 erstellen und die aktuellen gerätespezifischen Betreiberdaten an den Police Enforcement Server 8 senden. Der Konfigurationsserver 9 hinterlegt den aktuellen Satz von Konfigurationsdaten bzw. Betreiberdaten für das entsprechende Automatisierungsgerät 2 entsprechend der in dem Link des Gerätezertifikates Z angegebenen Informationen. Die Konfigurations- bzw. Betreiberdaten können zum Schutz ihrer Integrität signiert werden. Werden die Konfigurationsdaten bzw. Betreiberdaten beispielsweise in XML kodiert, kann die Signatur als Teil des XML-Files vorgesehen sein. Bei einer alternativen Ausführungsform kann der Link an den Policy Enforcement Server 8 übermittelt werden. Bei einer Ausführungsform sind Link und die Betreiberdaten bzw. Gerätekonfigurationsdaten gerätespezifisch. Der Policy Enforcement Server 8 übermittelt die aktuellen gerätespezifischen Betreiber- bzw. Konfigurationsdaten an das Automatisierungsgerät 2. Alternativ kann der Policy Enforcement Server 8 auch das Link zu den Konfigurations- bzw. Betreiberdaten an das Automatisierungsgerät 2 übermitteln. Erfolgt ein Update der Konfigurations- bzw. Betreiberdaten, kann das Automatisierungsgerät 2 dies abschließend an den Policy Enforcement Server 8 der Automatisierungsanlage 1 melden.

Das Ausführen von sicherheitsrelevanten Aktionen während der Nutzung des Automatisierungsgerätes 2 in einem Netzwerk sichert die generelle Funktionalität des Automatisierungsgerätes 2 gegen Missbrauch über das verbundene Kommunikationsnetz. Im erfindungsgemäßen System ist es möglich, dass Automatisierungsgeräte 2 entweder autark konfiguriert werden können oder über eine zentrale Infrastruktur, die abhängig von einem hinzugefügten Automatisierungsgerät 2 die Systemkonfiguration adaptieren kann. Durch die Einbettung in ein Gerätezertifikat Z werden die Konfigurationsinformationen bzw. Betreiberdaten kryptographisch gesichert. Die Bindung von Betreiber- bzw. Konfigurationsinformationen an einen Gerätetyp oder an ein spezifisches Automatisierungsgerät 2 kann darüber hinaus auch einen Prozess eines automatisierten Inventory Managements sowie eines Policy Enforcements der Automatisierungsanlage 1 unterstützen. Bei einer möglichen Ausführungsform werden die Konfigurationsdaten bzw. Betreiberdaten auch als Entscheidungskriterium genutzt, ob oder in welchem Subnetz das Automatisierungsgerät 2 geschaltet wird.

## Patentansprüche

1. Verfahren zum Bereitstellen von gerätespezifischen Betreiberdaten für ein Automatisierungsgerät (2) einer Automatisierungsanlage (1), welches sich mittels mindestens eines Authentisierungs-Credentials gegenüber einem Authentisierungsserver (7) der Automatisierungsanlage (1) authentisiert,
wobei bei Vorhandensein aktueller gerätespezifischer Betreiberdaten des Anlagenbetreibers der Automatisierungsanlage (1) für das Automatisierungsgerät (2) diese aktuellen gerätespezifischen Betreiberdaten an das Authentisierungs-Credential des Automatisierungsgeräts (2) gebunden werden;
wobei das Authentisierungs-Credential durch ein Geräte-Zertifikat (Z) des Automatisierungsgerätes (2) gebildet wird;
**dadurch gekennzeichnet, dass** das Binden der aktuellen gerätespezifischen Betreiberdaten an den Authentisierungs-Credential durch einen Policy Enforcement Server (8) der Automatisierungsanlage (1) erfolgt, wobei der Policy Enforcement Server (8) die aktuellen gerätespezifischen Betreiberdaten von einem Konfigurationsserver (9), welcher einen neuen Satz von gerätespezifischen Betreiberdaten entsprechend einem Einsatzplan des Automatisierungsgeräts (2) erstellt, erhält.

2. Verfahren nach Anspruch 1,
wobei die aktuellen gerätespezifischen Betreiberdaten für das Automatisierungsgerät (2)
Konfigurationsdaten zur Konfigurationen des Automatisierungsgerätes (2),
Firmwaredaten für das Automatisierungsgerät (2), und/oder Parameterdaten von Geräten (4), die durch das Automatisierungsgerät (2) gesteuert werden, aufweisen.

3. Verfahren nach einem der vorangehenden Ansprüche 1, 2, wobei die aktuellen gerätespezifischen Betreiberdaten in ein Attributzertifikat für das Geräte-Zertifikat (Z) des Automatisierungsgerätes (2) eingeschrieben werden, um die aktuellen gerätespezifischen Betreiberdaten an das Gerätezertifikat (Z) des Automatisierungsgerätes (2) zu binden.

4. Verfahren nach einem der vorangehenden Ansprüche 1, 2, wobei eine Adresse zur Adressierung der aktuellen gerätespezifischen Betreiberdaten in das Gerätezertifikat (Z) des Automatisierungsgerätes (2) eingeschrieben wird, um die aktuellen gerätespezifischen Betreiberdaten an das Gerätezertifikat (Z) des Automatisierungsgerätes (2) zu binden.

5. Verfahren nach Anspruch 4,
wobei die Adresse zur Adressierung der aktuellen gerätespezifischen Betreiberdaten anhand einer gerätespezifischen Seriennummer, die in dem Gerätezertifikat (Z) des Automatisierungsgerätes (2) enthalten ist, ermittelt wird.

6. Verfahren nach einem der vorangehenden Ansprüche 1, 2, wobei die aktuellen gerätespezifischen Betreiberdaten als kodierte Attributdaten in das Gerätezertifikat (Z) des Automatisierungsgerätes (2) eingeschrieben werden, um die aktuellen gerätespezifischen Betreiberdaten an das Gerätezertifikat (Z) des Automatisierungsgerätes (2) zu binden.

7. Verfahren nach einem der vorangehenden Ansprüche 1 - 6, wobei das Automatisierungsgerät (2) in regelmäßigen Zeitabständen oder bei Auftreten eines Ereignisses anfragt, ob aktuelle gerätespezifische Betreiberdaten des Anlagenbetreibers für das Automatisierungsgerät (2) vorhanden sind.

8. Verfahren nach Anspruch 1,
wobei der Policy Enforcement Server (8) die aktuellen gerätespezifischen Betreiberdaten an das Authentisierungs-Credential bindet, nachdem der Authentisierungsserver (7) dem Policy Enforcement Server (8) die erfolgreiche Authentisierung des Automatisierungsgerätes (2) gegenüber dem Authentisierungsservers (7) gemeldet hat.

9. Verfahren nach einem der vorangehenden Ansprüche 1 - 8, wobei die aktuellen gerätespezifischen Betreiberdaten digital signiert werden.

10. Verfahren nach einem der vorangehenden Ansprüche 1 - 9, wobei das mindestens eine Authentisierungs-Credential ein Gerätezertifikat und/oder einen kryptographischen Schlüssel und/oder ein kryptographisches Schlüsselpaar aufweist.

11. System zum Bereitstellen von gerätespezifischen Betreiberdaten für ein Automatisierungsgerät (2) einer Automatisierungsanlage (1), das dafür eingerichtet ist, sich mittels mindestens eines Authentisierungs-Credentials gegenüber einem Authentisierungsserver (7) der Automatisierungsanlage (1) zu authentisieren wobei bei Vorhandensein aktueller gerätespezifischer Betreiberdaten des Anlagenbetreibers der Automatisierungsanlage (1) für das Automatisierungsgerät (2) diese aktuellen gerätespezifischen Betreiberdaten an das Authentisierungs-Credential des Automatisierungsgerätes (2) durch einen hierfür eingerichteten Policy Enforcement Server (8)der Automatisierungsanlage (1) gebunden werden;
wobei das Authentisierungs-Credential durch ein Geräte-Zertifikat (Z) des Automatisierungsgerätes (2) gebildet wird, wobei der Policy Enforcement Server (8) dafür eingerichtet ist, die aktuellen gerätespezifischen Betreiberdaten von einem Konfigurationsserver (9), welcher einen neuen Satz von gerätespezifischen Betreiberdaten entsprechend einem Einsatzplan des Automatisierungsgeräts (2) erstellt, zu erhalten.

12. System nach Anspruch 11,
wobei der Policy Enforcement Server (8) dafür eingerichtet ist, die aktuellen gerätespezifischen Betreiberdaten von einem Konfigurationsserver (9) zu erhalten und an das Authentisierungs-Credential des Automatisierungsgerätes (2) zu binden, sobald dem Policy Enforcement Server (8) die erfolgreiche Authentisierung des Automatisierungsgerätes (2) gegenüber dem Authentisierungsserver (7) der Automatisierungsanlage (1) gemeldet wird.

13. System nach Anspruch 11 oder 12,
wobei das Automatisierungsgerät (2) ein Automatisierungssteuergerät, ein SPS-Steuergerät oder ein Feldgerät aufweist.

## Claims

1. Method for providing device-specific operator data for an automation device (2) in an automation installation (1), which automation device uses at least one authentication credential to authenticate itself to an authentication server (7) in the automation installation (1), wherein the existence of current device-specific operator data from the installation operator of the automation installation (1) for the automation device (2) prompts these current device-specific operator data to be linked to the authentication credential of the automation device (2); wherein the authentication credential is formed by a device certificate (Z) of the automation device (2);
**characterized in that** the current device-specific operator data are linked to the authentication credential by a policy enforcement server (8) in the automation installation (1), wherein the policy enforcement server (8) obtains the current device-specific operator data from a configuration server (9), which creates a new set of device-specific operator data in accordance with a plan of action of the automation device (2).

2. Method according to Claim 1,
wherein the current device-specific operator data for the automation device (2) have
configuration data for configurations of the automation device (2),
firmware data for the automation device (2), and/or
parameter data from devices (4) that are controlled by the automation device (2).

3. Method according to either of the preceding Claims 1 and 2, wherein the current device-specific operator data are written to an attribute certificate for the device certificate (Z) of the automation device (2) in order to link the current device-specific operator data to the device certificate (Z) of the automation device (2).

4. Method according to either of the preceding Claims 1 and 2, wherein an address for addressing the current device-specific operator data is written to the device certificate (Z) of the automation device (2) in order to link the current device-specific operator data to the device certificate (Z) of the automation device (2).

5. Method according to Claim 4,
wherein the address for addressing the current device-specific operator data is ascertained using a device-specific serial number that the device certificate (Z) of the automation device (2) contains.

6. Method according to either of the preceding Claims 1 and 2, wherein the current device-specific operator data are written as coded attribute data to the device certificate (Z) of the automation device (2) in order to link the current device-specific operator data to the device certificate (Z) of the automation device (2).

7. Method according to one of the preceding Claims 1-6, wherein the automation device (2) enquires, at regular intervals of time or when an event occurs, whether current device-specific operator data from the installation operator are existent for the automation device (2).

8. Method according to Claim 1,
wherein the policy enforcement server (8) links the current device-specific operator data to the authentication credential after the authentication server (7) has notified the policy enforcement server (8) of the successful authentication of the automation device (2) to the authentication server (7).

9. Method according to one of the preceding Claims 1-8, wherein the current device-specific operator data are digitally signed.

10. Method according to one of the preceding Claims 1-9, wherein the at least one authentication credential has a device certificate and/or a cryptographic key and/or a cryptographic key pair.

11. System for providing device-specific operator data for an automation device (2) in an automation installation (1), which automation device is set up to use at least one authentication credential to authenticate itself to an authentication server (7) in the automation installation (1), wherein the existence of current device-specific operator data from the installation operator of the automation installation (1) for the automation device (2) prompts these current device-specific operator data to be linked to the authentication credential of the automation device (2) by a policy enforcement server (8) set up thereof in the automation installation (1);
wherein the authentication credential is formed by a device certificate (Z) of the automation device (2), wherein the policy enforcement server (8) is set up to obtain the current device-specific operator data from a configuration server (9), which creates a new set of device-specific operator data in accordance with a plan of action of the automation device (2).

12. System according to Claim 11,
wherein the policy enforcement server (8) is set up to obtain the current device-specific operator data from a configuration server (9) and to link them to the authentication credential of the automation device (2) as soon as the policy enforcement server (8) is notified of the successful authentication of the automation device (2) to the authentication server (7) of the automation installation (1).

13. System according to Claim 11 or 12, wherein the automation device (2) has an automation controller, a PLC controller or a field device.

## Revendications

1. Procédé pour fournir des données d'exploitant, spécifiques d'un appareil, pour un appareil d'automatisation (2) d'une installation d'automatisation (1), qui s'authentifie au moyen d'au moins un authentifiant d'authentification par rapport à un serveur d'authentification (7) de l'installation d'automatisation (1), dans lequel en présence de données d'exploitant actuelles, spécifiques d'un appareil de l'exploitant d'installation de l'installation d'automatisation (1) pour l'appareil d'automatisation (2), ces données d'exploitant actuelles spécifiques d'un appareil sont liées à l'authentifiant d'authentification de l'appareil d'automatisation (2) ;
dans lequel l'authentifiant d'authentification est formé par un certificat d'appareil (Z) de l'appareil d'authentification (2) ;
**caractérisé en ce que** la liaison des données d'exploitant actuelles spécifiques d'un appareil à l'authentifiant d'authentification s'effectue par un policy enforcement server (8) de l'installation d'automatisation (1), dans lequel le policy enforcement server (8) obtient les données d'exploitant actuelles, spécifiques d'un appareil, d'un serveur de configuration (9) qui établit un nouveau jeu de données d'exploitant spécifiques d'un appareil correspondant à un plan d'utilisation de l'appareil d'automatisation (2).

2. Procédé selon la revendication 1,
dans lequel les données d'exploitant actuelles, spécifiques d'un appareil pour l'appareil d'automatisation (2) présentent des données de configuration pour des configurations de l'appareil d'automatisation (2),
des données de firmware pour l'appareil d'automatisation (2) et/ou
des données de paramètre d'appareils (4) qui sont commandées par l'appareil d'automatisation (2).

3. Procédé selon l'une des revendications précédentes 1, 2, dans lequel les données d'exploitant actuelles, spécifiques d'un appareil sont inscrites dans un certificat d'attribut pour le certificat d'appareil (Z) de l'appareil d'automatisation (2), pour lier les données d'exploitant actuelles, spécifiques d'un appareil, au certificat d'appareil (Z) de l'appareil d'automatisation (2).

4. Procédé selon l'une des revendications précédentes 1, 2, dans lequel une adresse pour l'adressage des données d'exploitant actuelles, spécifiques d'un appareil, sont inscrites dans le certificat d'appareil (Z) de l'appareil d'automatisation (2), pour lier les données d'exploitant actuelles, spécifiques d'un appareil, au certificat d'appareil (Z) de l'appareil d'automatisation (2).

5. Procédé selon la revendication 4,
dans lequel l'adresse pour l'adressage des données d'exploitant actuelles, spécifiques d'un appareil, est calculée à l'aide d'un numéro de série spécifique à l'appareil, qui est contenu dans le certificat d'appareil (Z) de l'appareil d'automatisation (2).

6. Procédé selon l'une des revendications précédentes 1, 2, dans lequel les données d'exploitant actuelles, spécifiques d'un appareil, sont inscrites en tant que données d'attribut codées dans le certificat d'appareil (Z) de l'appareil d'automatisation (2), pour lier les données d'exploitant actuelles, spécifiques d'un appareil, au certificat d'appareil (Z) de l'appareil d'automatisation (2).

7. Procédé selon l'une des revendications précédentes 1 - 6, dans lequel l'appareil d'automatisation (2) demande à intervalles réguliers ou en cas de survenue d'un évènement, si des données d'exploitant actuelles, spécifiques d'un appareil, de l'exploitant d'installation sont disponibles pour l'appareil d'automatisation (2).

8. Procédé selon la revendication 1,
dans lequel le policy enforcement server (8) lie les données d'exploitant actuelles, spécifiques d'un appareil, à l'authentifiant d'authentification, après que le serveur d'authentification (7) a transmis au policy enforcement server (8) l'authentification réussie de l'appareil d'automatisation (2) par rapport au serveur d'authentification (7).

9. Procédé selon l'une des revendications précédentes 1 - 8, dans lequel les données d'exploitant actuelles, spécifiques d'un appareil ont une signature numérique.

10. Procédé selon l'une des revendications précédentes 1 - 9, dans lequel l'au moins un authentifiant d'authentification présente un certificat d'appareil et/ou une clé cryptographique et/ou une paire de clés cryptographiques.

11. Système de fourniture de données d'exploitant spécifiques d'un appareil pour un appareil d'automatisation (2) d'une installation d'automatisation (1) qui est installé pour s'authentifier au moyen d'au moins un authentifiant d'authentification par rapport à un serveur d'authentification (7) de l'installation d'automatisation (1), dans lequel en présence de données d'exploitant actuelles, spécifiques d'un appareil, de l'exploitant d'installation de l'installation d'automatisation (1) pour l'appareil d'automatisation (2), ces données d'exploitant actuelles spécifiques d'un appareil sont liées à l'authentifiant d'authentification de l'appareil d'automatisation (2) par un policy enforcement server (8) de l'installation d'automatisation (1) installé pour cela ;
dans lequel l'authentifiant d'authentification est formé par un certificat d'appareil (Z) de l'appareil d'automatisation (2), dans lequel le policy enforcement server (8) est installé pour obtenir les données d'exploitant actuelles, spécifiques d'un appareil, d'un serveur de configuration (9) qui établit un nouveau jeu de données d'exploitant spécifiques d'un appareil correspondant à un plan d'utilisation de l'appareil d'automatisation (2).

12. Système selon la revendication 11, dans lequel le policy enforcement server (8) est installé pour obtenir d'un serveur de configuration (9) et lier à l'authentifiant d'authentification de l'appareil d'automatisation (2), les données d'exploitant actuelles, spécifiques d'un appareil, dès que l'authentification réussie de l'appareil d'automatisation (2) par rapport au serveur d'authentification (7) de l'installation d'automatisation (1) est signalée au policy enforcement server (8).

13. Système selon la revendication 11 ou 12, dans lequel l'appareil d'automatisation (2) présente un appareil de commande d'automatisation, un appareil de commande SPS ou un appareil de champ.
